# EUROPÄISCHE PATENTSCHRIFT

(11) **EP 3 696 491 B1**
(45) Veröffentlichungstag und Bekanntmachung des Hinweises auf die Patenterteilung: **01.09.2021**
(21) Anmeldenummer: 20158906.6
(22) Anmeldetag: 11.12.2009
(51) Int. Cl.: G01B 3/06, F16C 11/10

(54) **GLIEDERMASSSTAB**
FOLDING RULE
MÈTRE PLIANT

(30) Priorität: 04.02.2009 DE 102009007556
(43) Veröffentlichungstag der Anmeldung: 19.08.2020
(62) Teilanmeldung aus: 13184496.1
(73) Patentinhaber: Adga Adolf Gampper GmbH, 74535 Mainhardt (DE)
(72) Erfinder: GAMPPER, Gerald, 74535 Mainhardt (DE)
(74) Vertreter: Gauss, Nikolai

(56) Entgegenhaltungen:
- WO-A1-2006/086933
- DE-A1- 1 903 281
- DE-A1- 1 958 762
- DE-C- 14 289
- DE-U1- 9 303 238

## Beschreibung

Die Erfindung betrifft einen Gliedermaßstab mit langgestreckten flachen Gliedern, die paarweise gelenkig verbunden sind, bei dem eine Gelenkverbindung mit einer Drehachse eine erste Gelenkplatte aufweist, die an einem ersten Glied festgelegt ist und die eine zweite Gelenkplatte umfasst, welche an einem zweiten Glied befestigt ist, wobei an der ersten Gelenkplatte eine Federzunge mit einem Rastabschnitt ausgebildet ist, der mit einem ersten komplementären Rastabschnitt und mit einem zweiten komplementären Rastabschnitt an der zweiten Gelenkplatte zusammenwirkt, um die Gelenkverbindung in einer ersten Einstellung und in einer von der ersten Einstellung verschiedenen zweiten Einstellung mittels Federkraft zu rasten, wenn das erste Glied relativ zu dem zweiten Glied um die Drehachse geschwenkt wird.

Ein Gliedermaßstab der eingangs genannten Art ist aus der DE 2 037 063 A bekannt. Dort ist ein Gliedermaßstab beschrieben, dessen Glieder in einer eingefalteten Stellung und in einer ausgefalteten Stellung rasten. Hierzu sind jeweils zwei Glieder des Gliedermaßstabs durch eine Gelenkverbindung verbunden, die eine erste und eine zweite Gelenkplatte sowie einen Nietbolzen aufweist. Die Gelenkplatten sind an unterschiedlichen Gliedern des Maßstabs festgelegt. Sie werden von dem Nietbolzen durchsetzt. Die eine Gelenkplatte hat zwei Federzungen mit einem Rastabschnitt in Form einer Erhebung. In der anderen Gelenkplatte gibt es zwei Vertiefungen, die als komplementäre Rastabschnitte wirken. Die beiden Federzungen mit der Erhebung an der einen Gelenkplatte liegen zu beiden Seiten des Nietbolzens auf der Längsachse des Maßstabglieds, an dem die Gelenkplatte festgelegt ist. Die Vertiefungen der anderen Gelenkplatte befinden sich entsprechend auf der Längsachse des anderen Maßstabglieds links und rechts von dem Nietbolzen. Die Gelenkverbindung rastet, wenn eine Erhebung an den Federzungen der einen Gelenkplatte mit der entsprechenden Vertiefung an der anderen Gelenkplatte in Eingriff gerät. So wird eine exakt fluchtende Lage der Maßstabglieder gewährleistet, wenn die Maßstabglieder ausgefaltet sind.

Das gewährleistet eine hohe Messgenauigkeit beim Messen mit dem Gliedermaßstab.

In der DE 93 03 238 U1 ist ein Gliedermaßstab angegeben, dessen Glieder in einer eingefalteten und einer ausgefalteten Stellung rasten. Dieser Gliedermaßstab hat erste Gelenkplatten aus Kunststoff in Form von faserverstärktem Polyamid, die Rastnocken haben und zweiten Gelenkplatten aus Kunststoff in Form von faserverstärktem Polyamid, in denen keilförmige Rastvertiefungen für die Rastnocken ausgebildet sind.

Aus der DE 1 903 281 A1 ist ein Gliedermaßstab mit Maßstabgliedern bekannt, die jeweils durch eine Gelenkverbindung mit einer ersten Gelenkplatte und einer zweiten Gelenkplatte sowie einem Nietbolzen verbunden sind, die in einer eingefalteten und ausgefalteten Stellung rasten. Die erste Gelenkplatte ist hier aus einem federnden Material hergestellt, die eine Erhebung hat, die in eine Vertiefung der zweiten Gelenkplatte eintauchen kann, wenn die Glieder des Gliedermaßstabs ein- oder ausgefaltet sind.

Die DE 1 958 762 A1 beschreibt einen Gliedermaßstab mit Maßstabgliedern, die eine Gelenkverbindung mit einem Nietbolzen und einer ersten Gelenkplatte haben, die ausgehend vom ihrem von dem Nietbolzen durchsetzten Mittelfeld auf einander entgegengesetzten Seiten je eine ansteigende Erhebung hat, die jeweils in Vertiefungen in der zweiten Gelenkplatte aufgenommen werden können, wenn die Glieder des Gliedermaßstabs zueinander parallel sind.

Für das Vermessen von kleinen oder schwer zugänglichen Messobjekten wird ein Gliedermaßstab häufig nur teilweise ausgefaltet. Hier ist es günstig, wenn ein oder mehrere Maßstabglieder, die exakt fluchten, mit einem oder mehreren anderen Gliedern des Gliedermaßstabs in einer definierten Position an das Messobjekt angelegt werden können.

Aus der WO 2006/086933 A1 und der DE 14 289 C sind jeweils Gliedermaßstäbe mit Gelenkverbindungen bekannt, die einen Nietbolzen haben und Gelenkplatten aufweisen, die nicht nur in einer ausgefalteten und einer eingefalteten Stellung der Maßstabglieder rasten, sondern auch in einer Zwischenstellung.

Aufgabe der Erfindung ist es, einen hierzu alternativen Gliedermaßstab bereitzustellen, bei dem eine stabile Zwischenposition einer Gelenkverbindung für zwei Maßstabsglieder in einer abgewinkelten Stellung zwischen einer eingefalteten und einer ausgefalteten Stellung der Glieder des Maßstabs eingestellt werden kann.

Diese Aufgabe wird durch einen Gliedermaßstab mit den Merkmalen von Anspruch 1 gelöst.

Der erfindungsgemäße Gliedermaßstab ist derart ausgebildet, dass bei einem Schwenken des ersten Glieds relativ zu dem zweiten Glied der an der Federzunge der ersten Gelenkplatte ausgebildete Rastabschnitt mit dem zweiten komplementären Rastabschnitt an der zweiten Gelenkplatte die Gelenkverbindung zwischen einer eingefalteten und einer ausgefalteten Stellung der Glieder in einer abgewinkelten Stellung rastet.

An der ersten Gelenkplatte kann eine erste Federzunge mit einem Rastabschnitt und eine zweite Federzunge mit einem Rastabschnitt ausgebildet sein, die jeweils mit zwei ersten komplementären Rastabschnitten und mit zwei zweiten komplementären Rastabschnitten an der zweiten Gelenkplatte zusammenwirken, um die Gelenkverbindung in einer ersten Einstellung und in einer von der ersten Einstellung verschiedenen zweiten Einstellung mittels Federkraft zu rasten, wenn das erste Glied relativ zu dem zweiten Glied um die Drehachse geschwenkt wird. Bei einem Schwenken des ersten Glieds relativ zu dem zweiten Glied rastet der an der ersten und der zweiten Federzunge der ersten Gelenkplatte ausgebildete Rastabschnitt mit dem zweiten komplementären Rastabschnitt an der zweiten Gelenkplatte die Gelenkverbindung zwischen einer eingefalteten und einer ausgefalteten Stellung der Glieder in einer abgewinkelten Stellung.

Die erste Federzunge und/oder die zweite Federzunge kann einen Rastabschnitt mit einer Deckenfläche und mit schrägen, zu einer Längskante des Gliedes weisenden Seitenflächen aufweisen, der bei einem Rasten in einem der ersten komplementären Rastabschnitte an der zweiten Gelenkplatte mit der Deckenfläche und mit den Seitenflächen in den entsprechenden ersten komplementären Rastabschnitt eingreift und der bei einem Rasten in einem der zweiten komplementären Rastabschnitte nur mit dem Abschnitt der Deckenfläche in dem entsprechenden zweiten komplementären Rastabschnitt an der zweiten Gelenkplatte rastet.

Damit lässt sich erreichen, dass die Gelenkverbindung bei einem Rasten des Rastabschnitts der ersten Federzunge und/oder der zweiten Federzunge in einem der ersten komplementären Rastabschnitte vergleichsweise stark rastet und bei einem Rasten des Rastabschnitts der ersten Federzunge und/oder der zweiten Federzunge in einem der zweiten komplementären Rastabschnitte nur schwach.

Der erste und der zweite komplementäre Rastabschnitt an der zweiten Gelenkplatte kann auf einer Kreisbahn um die Drehachse der Gelenkverbindung liegen. In Bezug auf die Drehachse der Gelenkverbindung stehen dabei der erste und der zweite komplementäre Rastabschnitt zueinander in einem stumpfen Winkel oder einem spitzen Winkel, vorzugsweise in einem Winkel *ϕ* = ±90°, d.h. einem rechten Winkel.

Eine bevorzugte Ausgestaltung der Erfindung sieht vor, dass der zweite komplementäre Rastabschnitt eine seitliche Aussparung in der zweiten Gelenkplatte ist. Vorzugsweise ist diese seitliche Aussparung rechteckförmig.

Alternativ hierzu kann der zweite komplementäre Rastabschnitt auch als eine Vertiefung am Umfangsbereich der zweiten Gelenkplatte ausgebildet sein. Diese Vertiefung hat vorzugsweise die Form einer Wanne mit einer konkav gekrümmten Bodenfläche. Die Bodenfläche der wannenartigen Vertiefung kann aber auch eben sein. Es ist auch möglich, die Vertiefung mit einer Durchbrechung auszuführen. Eine solche Vertiefung kann beispielsweise durch Stanzen einer ebenen Gelenkplatte mit einem geeigneten Stanzwerkzeug erzeugt werden. Es ist auch möglich, den zweiten komplementären Rastabschnitt als eine runde oder als eine eckige Einschlifffase am Umfangsbereich der zweiten Gelenkplatte auszuführen.

Der Rastabschnitt an der Federzunge ist vorzugsweise eine Erhebung. Es ist günstig, diese Erhebung als Pyramidenstumpf auszubilden, der eine zur Drehachse der Gelenkverbindung weisende langgestreckte schräge Flanke hat.

Auch der erste komplementäre Rastabschnitt in der zweiten Gelenkplatte ist vorzugsweise als Vertiefung ausgebildet. Hier ist es ebenfalls günstig, wenn diese Vertiefung die Form eines Pyramidenstumpfes mit einer zur Drehachse der Gelenkverbindung weisenden langgestreckten schrägen Flanke hat. Eine bevorzugte Ausführungsform der Erfindung sieht vor, dass der zweite komplementäre Rastabschnitt zur Deckfläche des Pyramidenstumpfes komplementär gestaltet ist.

Indem in dem ersten Glied eine wannenartige Ausnehmung vorgesehen ist, in welche die Federzunge mit Rastabschnitt bei einem Verstellen der Gelenkverbindung eintauchen kann, lässt sich erreichen, dass die Glieder des Gliedermaßstabs eng aneinanderliegen, wenn der Gliedermaßstab zusammengefaltet ist. Eine zusätzliche wannenartige Ausnehmung in dem zweiten Glied ermöglicht das Versenken von Rastabschnitten in der zweiten Gelenkplatte. Vorzugsweise hat das erste Glied des Gliedermaßstabs außerdem eine Versenkungsvertiefung für die erste Gelenkplatte. Von Vorteil ist es, wenn in dem zweiten Glied entsprechend eine Versenkungsvertiefung für die zweite Gelenkplatte ausgebildet ist. Hierdurch wird erreicht, dass die Glieder des Maßstabs im zusammengefalteten Zustand so aneinander liegen, dass die beiden Gelenkplatten einer Gelenkverbindung verborgen sind. Damit bietet der zusammengefaltete Gliedermaßstab zwei homogene rechteckige Seitenflächen, die sich hervorragend für Werbeaufdrucke eignen.

Ein Stegabschnitt an den Gliedern des Gliedermaßstabs im Bereich einer Durchgangsbohrung für einen Nietbolzen der Gelenkverbindung bewirkt eine hohe mechanische Belastbarkeit des Gliedermaßstabs im Bereich der Gelenkverbindung. Das gewährleistet, dass der Maßstab trotz der wannenartigen Vertiefungen im Bereich der Gelenkverbindung stabil ist und er dort nicht leicht brechen kann.

Im Folgenden wird die Erfindung anhand der in der Zeichnung in schematischer Weise dargestellten Ausführungsbeispiele näher erläutert. Es zeigen
- Fig. 1: eine Seitenansicht eines Gliedermaßstabs mit einem ausgeschwenkten Maßstabglied;
- Fig. 2a: und b zwei gelenkig verbundene Glieder des Gliedermaßstabs in einer ausgefalteten und in einer abgewinkelten Raststellung;
- Fig. 3: eine Explosionsdarstellung der Gelenkverbindung von zwei Gliedern des Gliedermaßstabs;
- Fig. 4a,: b und c Ansichten einer ersten Gelenkplatte der Gelenkverbindung;
- Fig. 5a,: b und c Ansichten einer zweiten Gelenkplatte der Gelenkverbindung;
- Fig. 6: einen Schnitt der Gelenkverbindung in ausgefalteter Raststellung;
- Fig. 7: einen Schnitt der Gelenkverbindung entlang der Linie VII-VII aus Fig. 6;
- Fig. 8: eine Draufsicht der Gelenkverbindung in abgewinkelter Raststellung;
- Fig. 9: einen Schnitt der Gelenkverbindung entlang der Linie IX-IX aus Fig. 8;
- Fig. 10: eine erste alternative Ausführungsform der zweiten Gelenkplatte in der Gelenkverbindung;
- Fig. 11: einen vergrößerten Schnitt der zweiten Gelenkplatte entlang der Linie XI-XI aus Fig. 10; und
- Fig. 12a: bis e Schnitte von Rastabschnitten weiterer alternativer Ausführungsformen der zweiten Gelenkplatte.

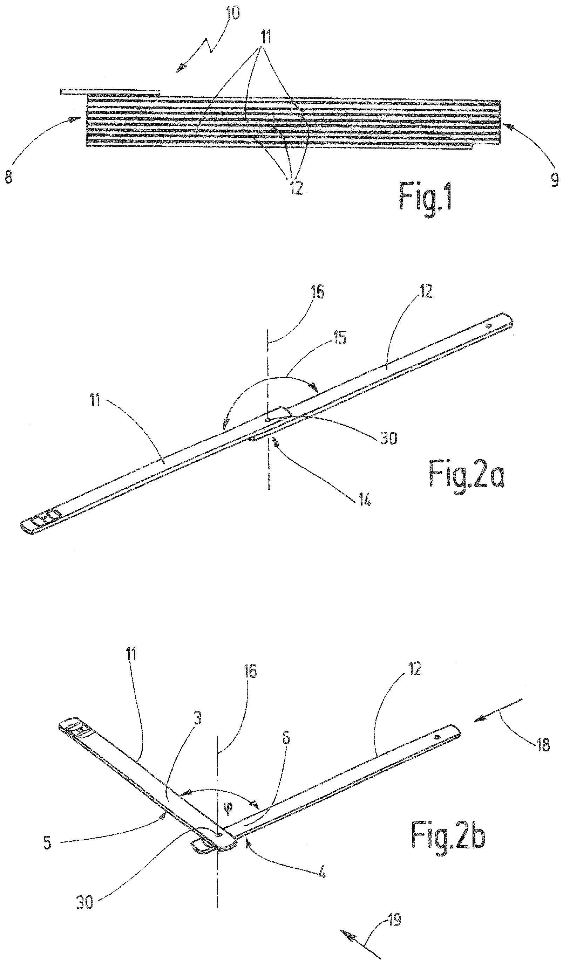

Der Gliedermaßstab 10 in Fig. 1 hat langgestreckte flache Glieder 11,12, die aus Holz bestehen. Die Glieder 11,12 sind in der Nähe ihrer Gliedenden im Abstand der stirnseitigen Enden 8, 9 paarweise gelenkig verbunden. Die eingefalteten Glieder 11,12 des Gliedermaßstabs 10 liegen quasi ohne Luftspalt eng aneinander. Die eingefalteten Glieder des Gliedermaßstabs 10 bilden damit zwei Flächen, die homogen erscheinen und für großflächige Werbeaufdrucke geeignet sind.

Die Fig. 2a zeigt ein Glied 11 und ein Glied 12 des Gliedermaßstabs 10. Die Glieder 11,12 sind durch eine Gelenkverbindung 14 verbunden. Die Gelenkverbindung 14 ermöglicht ein Verschwenken des Glieds 11 entsprechend dem Doppelpfeil 15 relativ zu dem Glied 12 um die Drehachse 16. Die Glieder 11,12 sind hier in einer ausgefalteten Schwenkstellung, in der die Gelenkverbindung 14 rastet.

Die Gelenkverbindung 14 hat einen Nietbolzen 30. Der Nietbolzen 30 greift durch miteinander fluchtende Bohrungen in den Gliedern 11,12 hindurch. Er stützt sich mit seinen Köpfen in Vertiefungen an den Breitseitenflächen 3,4 der Glieder 11,12 ab. An ihren einander zugewandten Breitseitenflächen 5,6 werden die Glieder 11, 12 durch den Nietbolzen 30 zusammengedrückt.

In Fig. 2b sind die Glieder 11,12 in einer abgewinkelten Schwenkstellung gezeigt: Hier steht das Glied 11 unter einem rechten Winkel *ϕ* = 90° zu dem Glied 12. Auch in dieser Schwenkposition rastet die Gelenkverbindung 14. Weitere Rastungen der Gelenkverbindung 14 gibt es bei Übereinanderliegen der Glieder 11,12 in der mit dem Pfeil 18 angedeuteten Schwenkposition *ϕ* = 0 und in der Schwenkposition entsprechend Pfeil 19 bei *ϕ* = -90°.

Die Gelenkverbindung 14 hat eine erste Gelenkplatte 21 und eine zweite Gelenkplatte 24. Die erste Gelenkplatte 21 besteht vorzugsweise aus gehärtetem Federstahl. An der Gelenkplatte 21 sind als Krallen wirkende Zacken 22 ausgebildet. Mittels dieser Zacken 22 ist die Gelenkplatte 21 im Holz des Gliedes 11 verankert.

Auch die zweite Gelenkplatte 24 ist vorzugsweise in gehärtetem Federstahl ausgeführt. Sie hat Zacken 25, mit denen sie im Holz von Glied 12 befestigt sind.

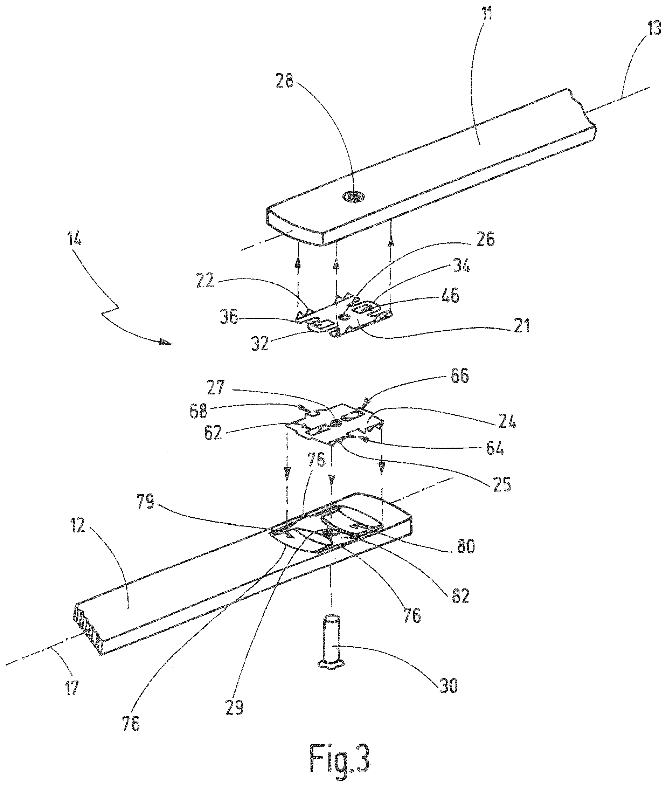

Wie die Fig. 3 zeigt, haben die Gelenkplatten 21, 24 jeweils eine mittige Bohrung 26,27. Diese Bohrungen 26,27 fluchten mit den entsprechenden Bohrungen 28,29 in den Gliedern 11,12 für den Nietbolzen 30.

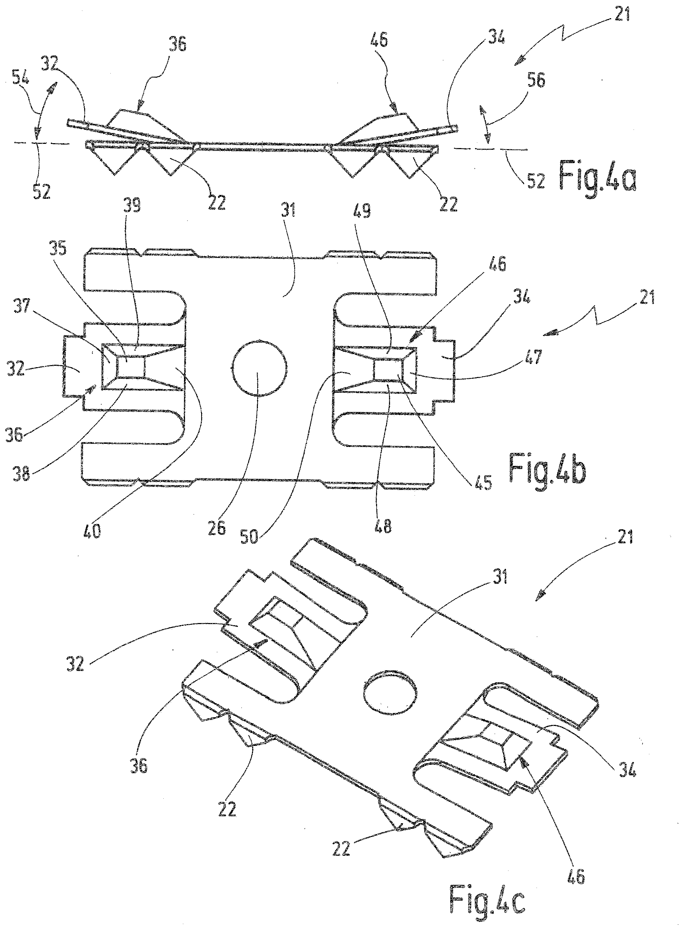

Die erste Gelenkplatte 21 ist in Fig. 4a in Seitenansicht, in Fig. 4b in Draufsicht und in Fig. 4c in perspektivischer Ansicht gezeigt. Die erste Gelenkplatte 21 hat eine Mittenpartie 31, an die zwei Federzungen 32,34 anschließen. An den beiden Federzungen 32,34 gibt es jeweils einen Rastabschnitt 36,46. Die Rastabschnitte 36,46 sind als Erhebung in der Form eines Pyramidenstumpfs gestaltet. Der Pyramidenstumpf 36 und der Pyramidenstumpf 46 haben eine Deckfläche 35 und eine Deckfläche 45. Von den Dachflächen 35,45 verläuft eine langgestreckte Auflaufschräge 40,50 hinab zur Mittenpartie 31 der Gelenkplatte 21. Mittels der Zacken 22 ist die Gelenkplatte 21 so im Holz des Gliedes 11 verankert, dass die beiden Federzungen 32,34 zu beiden Seiten des in Fig. 3 gezeigten Nietbolzens 30 auf der Längsachse 13 von Glied 11 liegen.

Mit den schrägen Seitenflächen 37,38,39 bzw. 47,48,49 erhebt sich der Pyramidenstumpf 36 und der Pyramidenstumpf 46 aus der Federzunge 32 bzw. 34. Im unbelasteten Zustand ragen die Federzungen 32,34 gegenüber der Ebene 52 der Gelenkplatte 21 schräg nach oben. Die Federzungen 32, 34 können eine mittels der Doppelpfeile 54,56 angedeutete Federbewegung ausführen.

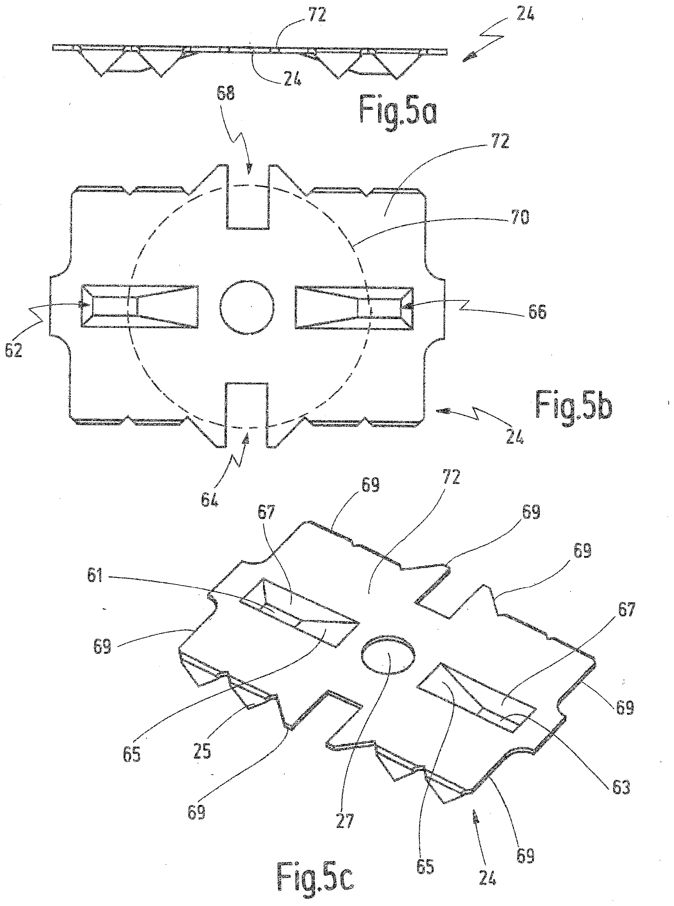

Fig. 5a zeigt entsprechend die zweite Gelenkplatte 24 in Seitenansicht, Fig. 5b in Draufsicht und Fig. 5c in perspektivischer Ansicht. Die zweite Gelenkplatte 24 hat einen ersten, zweiten, dritten und vierten Rastabschnitt 62,64,66 und 68. Die vier Rastabschnitte 62,64,66,68 sind symmetrisch auf einer Kreisbahn 70 um die mittige Bohrung 27 in der Gelenkplatte 24 angeordnet. Mittels der Zacken 25 ist die Gelenkplatte 21 so im Holz des Gliedes 12 verankert, dass, wie die Fig. 3 zeigt, der erste und der dritte Rastabschnitt 62,66 zu beiden Seiten des Nietbolzens 30 auf der Längsachse 17 von Glied 12 liegen.

An dem Glied 12 des Gliedermaßstabs ist der erste und dritte Rastabschnitt 62,66 also mittig angeordnet. Der zweite und vierte Rastabschnitt 64,68 weist demgegenüber jeweils zu einer Längskante des Glieds 12: Der zweite und vierte Rastabschnitt 64, 68 ist in Bezug auf die Drehachse 16 der Gelenkverbindung 14 zu dem ersten und dem vierten Rastabschnitt 64,68 auf der Kreisbahn 70 um die Bohrung 27 der Gelenkplatte 24 in einem rechten Winkel angeordnet. Der erste und dritte Rastabschnitt 62,66 ist komplementär zu den Erhebungen der Pyramidenstümpfe 36,46 der ersten Gelenkplatte 21 als pyramidenstumpfförmige Vertiefung geformt. Die jeweilige Vertiefung hat eine Bodenfläche 61,63, zu der sich schräge Seitenflächen 65,67 absenken. Die Rastabschnitte 64 und 68 sind als Ausnehmung bzw. Aussparung im Umfangsbereich 69 der Grundplatte gestaltet. Diese Ausnehmung kann beispielsweise durch Ausstanzen mit einem Stanzwerkzeug hergestellt werden.

Die Rastabschnitte 62,64,66,68 sind komplementäre Rastabschnitte zu den an den beiden Federzungen 32,34 ausgebildeten Rastabschnitten 36,46 der ersten Gelenkplatte 21: Die Deckfläche der Pyramidenstümpfe 36,46 wird unter Wirkung einer Federkraft der Federzungen 32,34 der ersten Gelenkplatte 21 gegen die Oberfläche der zweiten Gelenkplatte 24 gedrückt. Bei einem Verstellen der Gelenkverbindung 14 um die Drehachse 16 werden die Deckflächen 35,45 der Pyramidenstümpfe 36,46 entlang der Kreisbahn 70 über die Oberfläche 72 der zweiten Gelenkplatte 24 bewegt. Wenn dabei die an den Federzungen 32,34 der ersten Gelenkplatte 21 ausgebildeten pyramidenstumpfförmigen Rastabschnitte 36,46 an den Rastabschnitten 62 oder 68 bzw. 64 oder 66 der zweiten Gelenkplatte 24 liegen, geraten die Rastabschnitte 36,46 der ersten Gelenkplatte 21 mit den Rastabschnitten 62 und 66 oder mit den Rastabschnitten 64 und 68 der zweiten Gelenkplatte 24 in Eingriff. Indem die Rastabschnitte 32 und 46 der ersten Gelenkplatte 21 in die Rastabschnitte 62 und 66 der zweiten Gelenkplatte 24 eingreifen, wird eine Rastung der Gelenkanordnung 14 in einer ein- oder ausgefalteten Stellung der Glieder 11, 12 des Gliedermaßstabs bewirkt. Wenn die Rastabschnitte 64 und 68 der zweiten Gelenkplatte 24 mit den Rastabschnitten 36 und 46 der ersten Gelenkplatte 21 in Eingriff geraten, rastet die Gelenkverbindung 14 in einer Stellung, bei der die Glieder 11, 12 des Gliedermaßstabs um einen Winkel *ϕ* = ±90° zueinander verschwenkt sind.

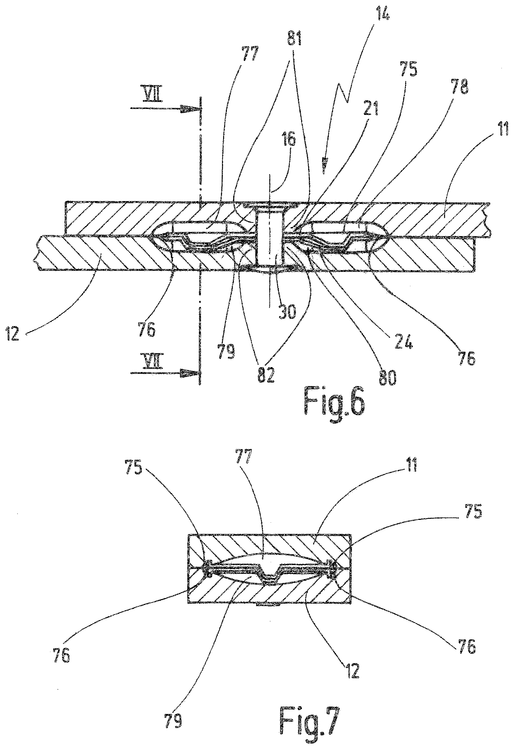

Die Fig. 6 zeigt einen Schnitt der Gelenkverbindung 14 in einer ausgefalteten Stellung der Glieder 11,12. Beide Enden des Nietbolzens 30 sind in einer Versenkung 71,72 aufgenommen. Der an der Federzunge 32 ausgebildete Pyramidenstumpf 36 an der Gelenkplatte 21 ist hier mit dem komplementären, als Vertiefung ausgebildeten Rastabschnitt 62 an der Gelenkplatte 24 ohne Spiel in Eingriff. Entsprechendes gilt für den Pyramidenstumpf 46 an der Federzunge 34 der Gelenkplatte 21 und dem hierzu komplementären Rastabschnitt 66 an der Gelenkplatte 24. Hierdurch wird eine präzise Rastung der Gelenkverbindung erreicht.

Die Gelenkplatte 21 ist in dem Glied 11 versenkt, die Gelenkplatte 24 in dem Glied 12. An dem Glied 11 ist hierzu eine Versenkungsvertiefung 75 für die Gelenkplatte 21 ausgebildet. Entsprechend gibt es eine Versenkungsvertiefung 76 an dem Glied 12 für die Gelenkplatte 24. In der Versenkungsvertiefung 75 gibt es zusätzlich eine erste und eine zweite wannenartige Ausnehmung 77,78. Die Versenkungsvertiefung 76 an dem Glied 12 hat zwei entsprechende wannenartig geformte, vertiefte Ausnehmungen 79,80.

Zwischen der ersten wannenartigen Ausnehmung 77 und der zweiten wannenartigen Ausnehmung 78 hat das Glied 11 im Bereich der Gelenkverbindung 14 einen Stegabschnitt 81. Entsprechend ist an dem Glied 12 zwischen der ersten wannenartigen Ausnehmung 79 und der zweiten wannenartigen Ausnehmung 80 ein Stegabschnitt 82 ausgebildet. Diese Stegabschnitte 81,82 bewirken eine gute Stabilität der Gelenkverbindung 14 im Bereich des Nietbolzens 30, trotz der Schwächung des Materials der Glieder 11,12 aufgrund der wannenartigen Ausnehmungen 77,78 und 79,80.

Fig. 7 zeigt einen Schnitt der Gelenkverbindung 14 entlang der Linie VII-VII aus Fig. 6. Die wannenartigen Ausnehmungen 77,78 nehmen die Federzungen 32,34 mit den daran geformten Rastabschnitten 36,46 auf, wenn das Glied 11 zu dem Glied 12 in der Gelenkverbindung 14 aus einem zusammengefalteten oder einer ausgefalteten Stellung geschwenkt wird. In den wannenartigen Ausnehmungen 79,80 sind die vertieft geformten Rastabschnitte 62 und 66 der zweiten Gelenkplatte 24 versenkt. Die Gelenkverbindung 14 ermöglicht so ein flächiges Aneinanderliegen von Glied 11,12.

Die schrägen Seitenflächen 38,39 des Rastabschnitts 36 der Gelenkplatte 21 und die komplementäre Form von Rastabschnitt 62 der zweiten Gelenkplatte 24 gewährleistet einerseits das weiche Ein- und Ausrasten der Gelenkverbindung 14 bei einem Schwenken der Glieder 11,12 und andererseits, dass die Gelenkverbindung ab einer bestimmten Öffnungsstellung der Glieder 11, 12 mittels Federkraft von selbst in die Raststellung bewegt wird.

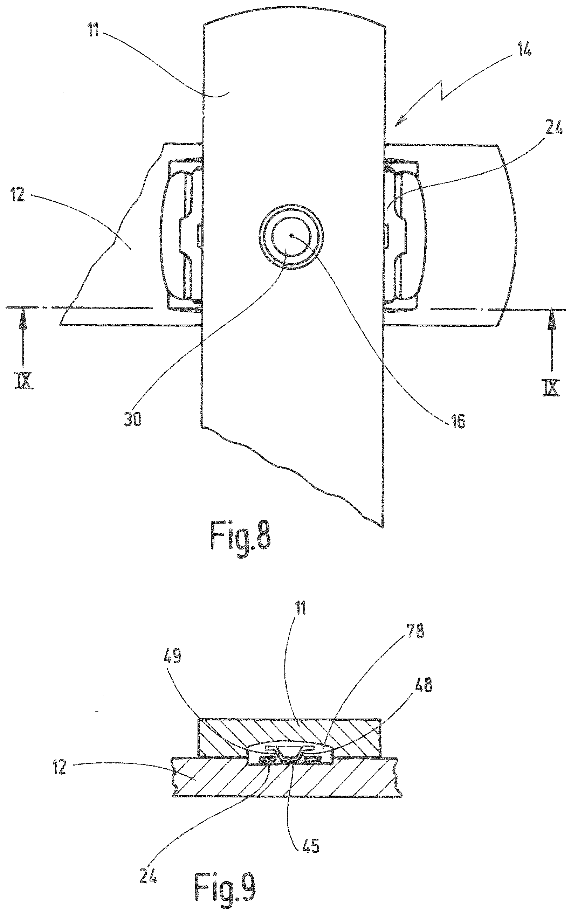

In Fig. 8 ist die Gelenkverbindung 14 in abgewinkelter 90°-Schwenkposition dargestellt. Hier wirken die Rastabschnitte 36,46 der Gelenkplatte mit den als Aussparungen im Randbereich geformten Rastabschnitten 64,68 der zweiten Gelenkplatte zusammen.

Die Fig. 9 zeigt einen Schnitt der Gelenkverbindung 14 aus Fig. 8 entlang der Linie IX-IX. Die Federzunge 34 der ersten Gelenkplatte 21 taucht hier mit dem Abschnitt der Deckfläche 45 des pyramidenförmigen Rastabschnitts 46 in die Ausnehmung 64 der zweiten Gelenkplatte 24. Die Federzunge 34 mit dem pyramidenförmigen Rastabschnitt 46 ist dabei in der wannenartigen Ausnehmung 78 in dem Glied 11 aufgenommen. Die schrägen Seitenflächen 48,49 des Rastabschnitts 46 ermöglichen auch hier einerseits ein sanftes Ein- und Ausrasten aus der Raststellung. Andererseits bewirken die schrägen Seitenflächen 48,49 des Rastabschnitts 46 auch hier wiederum, dass die Gelenkverbindung durch die Kraft der Federzungen 32, 34 in die Raststellung bewegt wird, wenn die Glieder 11, 12 in einem Winkel zueinander stehen, der nur wenig von einem rechten Winkel abweicht.

Da der Rastabschnitt 46 nur mit dem Abschnitt der Deckfläche 45 mit der Aussparung 64 an der zweiten Gelenkplatte 24 zusammenwirkt, ist die Rastung von Rastabschnitt 46 der zweiten Gelenkplatte 24 in dem Rastabschnitt 64 weniger stark als die Rastung im Rastabschnitt 62. Entsprechendes gilt für die Rastung von Rastabschnitt 36 mit der Aussparung 68, die als vierter komplementärer Rastabschnitt in der zweiten Gelenkplatte 24 wirkt. Damit wird erreicht, dass die Gelenkverbindung 14 bei ausgefalteter und zusammengefalteter Stellung der Glieder 11,12 vergleichsweise stark rastet, in den abgewinkelten 90°-Schwenkpositionen dagegen nur schwach.

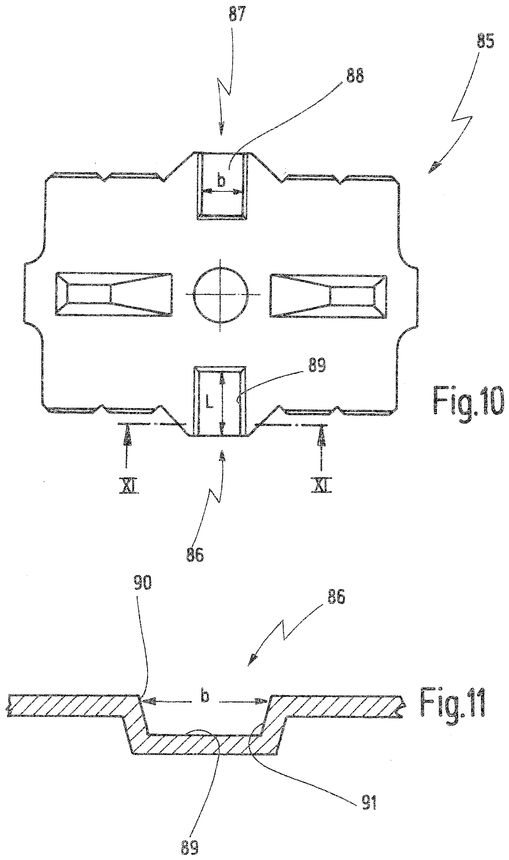

Die Fig. 10 zeigt eine alternative Ausführung 85 für die zweite Gelenkplatte der Gelenkverbindung 14. Hier sind zweite und vierte komplementäre Rastabschnitte 86,87 vorgesehen, die als Wanne bzw. Rinne 88,89 mit eckigen Kanten gestaltet sind. Im Übrigen entspricht die alternative Ausführung 85 für die zweite Gelenkplatte 24 der in Fig. 5a, b und c gezeigten Gelenkplatte.

Fig. 11 zeigt einen vergrößerten Schnitt der Gelenkplatte 85 entlang der Linie XI-XI aus Fig. 10. Die Wanne 89 hat eine ebene Bodenfläche und schräge Seitenflächen 90,91. Die Form der Wanne bzw. Rinne 89 entspricht der Kontur des Abschnitts der Rastabschnitte 36,46 an Federzungen 32,34 der ersten Gelenkplatte 21 im Bereich der Deckfläche 35,45 der pyramidenstumpfförmigen Erhebung.

Nachfolgend sind weitere mögliche Geometrien für zweite und vierte komplementäre Rastabschnitte bei einer alternativen Ausführungsform für die zweite Gelenkplatte der Gelenkverbindung anhand von Schnitten erläutert, die dem in Fig. 11 abgebildeten Schnitt entsprechen.

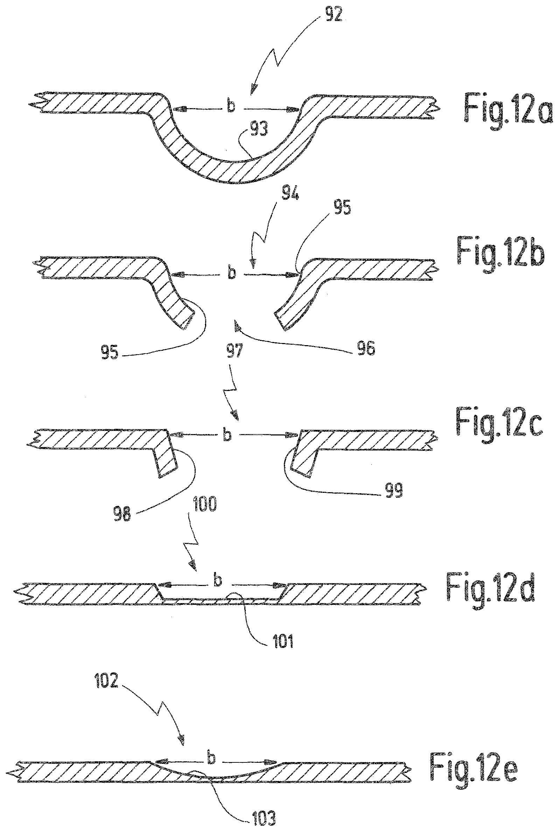

Die Fig. 12a zeigt einen Rastabschnitt 92 in der Form einer runden Wanne bzw. Rinne mit gekrümmter Bodenfläche 93. In Fig. 12b ist ein Rastabschnitt 94 in der Form einer runden Wanne gezeigt, in deren Bodenfläche 95 eine Durchbrechung 96 ausgebildet ist. Der in Fig. 12c gezeigte Rastabschnitt 97 hat schräge Seitenflächen 98, die zu einer Durchbrechung 99 geöffnet sind.

Die Breite b und die Länge I der Rastabschnitte 86,87,92,94,97 ist jeweils an die Bemaßung der pyramidenförmigen Rastabschnitte 36,46 an der ersten Gelenkplatte angepasst. Die geometrische Form der Rastabschnitte einschließlich deren Tiefe beeinflusst die Stärke der Rastung der Gelenkverbindung bei einer entsprechend abgewinkelten Stellung der Glieder des Gliedermaßstabs.

Die Rastabschnitte der zweiten Gelenkplatte 24 aus Fig. 5a bis c und bei den anhand von Fig. 10, 11 sowie Fig. 12a, b und c erläuterten alternativen Ausführungsformen hierfür können etwa durch Stanzen und Tiefziehen einer Platte aus Federstahl hergestellt werden.

Die Fig. 12d zeigt als Rastabschnitt 100 bei einer alternativen Ausführungsform für die zweite Gelenkplatte eine eckige Einschlifffase bzw. Einkerbung 101. In der Fig. 12e ist ein als Einkerbung in Form einer runden Einschlifffase 103 gestalteter Rastabschnitt 102 gezeigt. Die Tiefe der jeweiligen Einschlifffase kann beispielsweise 0,2 mm betragen. Auch hier entsprechen die Breite b und Länge I der Einschlifffasen 101, 103 der Größe der pyramidenförmigen Rastabschnitte 36,34 an der zweiten Gelenkplatte.

Zusammenfassend ist folgendes festzuhalten: Die Erfindung bezieht sich auf einen Gliedermaßstab 10 mit langgestreckten flachen Gliedern 11, 12, die paarweise gelenkig verbunden sind. Bei dem Gliedermaßstab ist eine Gelenkverbindung 14 mit einer Drehachse 16 vorgesehen. Die Gelenkverbindung 14 weist eine erste Gelenkplatte 21 auf, welche an einem ersten Glied 11 festgelegt ist. Sie umfasst eine zweite Gelenkplatte 24, die an einem zweiten Glied 12 befestigt ist. An der ersten Gelenkplatte 21 ist eine Federzunge 32,34 mit einem Rastabschnitt 36,46 ausgebildet, der mit einem ersten komplementären Rastabschnitt 62,66 und mit einem zweiten komplementären Rastabschnitt 64,68 an der zweiten Gelenkplatte 24 zusammenwirkt, um die Gelenkverbindung 14 in einer Einstellung und in einer von der ersten Einstellung verschiedenen zweiten Einstellung mittels Federkraft zu rasten, wenn das erste Glied 11 relativ zu dem zweiten Glied 12 um die Drehachse 16 geschwenkt wird. Bei einem Schwenken des ersten Gliedes 11 relativ zu dem zweiten Glied 12 rastet der an der Federzunge 32,34 der ersten Gelenkplatte 21 ausgebildete Rastabschnitt 36,46 mit dem zweiten komplementären Rastabschnitt 64,68 an der zweiten Gelenkplatte 24 in einer abgewinkelten Stellung zwischen einer eingefalteten und einer ausgefalteten Stellung der Glieder 11,12.

Gemäß einem Aspekt der Erfindung kann der zweite komplementäre Rastabschnitt in einem Gliedermaßstab eine seitliche Aussparung 64,68 in der zweiten Gelenkplatte 24 sein. Diese seitliche Aussparung 64,68 kann insbesondere rechteckförmig sein. Gemäß einem weiteren Aspekt der Erfindung ist der zweite komplementäre Rastabschnitt als eine Vertiefung 88,89,92 in der zweiten Gelenkplatte 85 ausgebildet. Die Vertiefung 92 kann eine gekrümmte Bodenfläche 93 haben. Die Bodenfläche 88,89 der Vertiefung kann aber auch eben sein. In der Vertiefung 96,99 kann insbesondere eine Durchbrechung ausgebildet sein.

Der zweite komplementäre Rastabschnitt in einem Gliedermaßstab kann gemäß einem weiteren Aspekt der Erfindung auch eine runde 103 oder eine eckige 101 Einschlifffase in der zweiten Gelenkplatte sein. Insbesondere kann der Rastabschnitt 36,46 an der Federzunge 32, 34 eine Erhebung sein. Der Rastabschnitt an der Federzunge 32,34 kann auch als Pyramidenstumpf 36,46 ausgebildet sein, der eine zur Drehachse 16 der Gelenkverbindung 14 weisende, langgestreckte schräge Flanke 40, 50 hat.

Gemäß einem Aspekt der Erfindung kann der erste komplementäre Rastabschnitt in der zweiten Gelenkplatte 24 als eine Vertiefung 62,66 ausgebildet sein.

Gemäß einem weiteren Aspekt der Erfindung kann in dem ersten Glied 11 eine wannenartige Ausnehmung 77,78 vorgesehen sein, in welche die Federzunge 32,34 mit dem Rastabschnitt 36,46 bei einem Verstellen der Gelenkverbindung 14 eintauchen kann. Gemäß einem weiteren Aspekt der Erfindung kann in dem zweiten Glied 12 insbesondere eine wannenartige Ausnehmung 79,80 vorgesehen sein, welche einen Rastabschnitt 62,66 der zweiten Gelenkplatte 24 aufnimmt.

Gemäß einem Aspekt der Erfindung kann das erste Glied 11 eine Versenkungsausnehmung 75 für die erste Gelenkplatte 21 haben und/oder das zweite Glied 12 eine Versenkungsausnehmung 76 für die zweite Gelenkplatte 24 haben. Gemäß einem weiteren Aspekt der Erfindung kann im Bereich einer Durchgangsbohrung für einen Nietbolzen 30 der Gelenkverbindung 14 ein Stegabschnitt 5 vorgesehen sein.

## Patentansprüche

1. Gliedermaßstab mit langgestreckten flachen Gliedern (11, 12), die paarweise gelenkig verbunden sind und die jeweils eine Längsachse (13, 17) aufweisen,
bei dem eine Gelenkverbindung (14) mit einer Drehachse (16) und mit einem Nietbolzen (30) eine erste Gelenkplatte (21) aufweist, die an einem ersten Glied (11) festgelegt ist, und eine zweite Gelenkplatte (24) umfasst, welche an einem zweiten Glied (12) befestigt ist,
wobei an der ersten Gelenkplatte (21) eine Federzunge (32, 34) mit einem Rastabschnitt (36, 46) ausgebildet ist, der mit einem ersten komplementären Rastabschnitt (62, 66) und mit einem zweiten komplementären Rastabschnitt (64, 68) an der zweiten Gelenkplatte (24) zusammenwirkt, um die Gelenkverbindung (14) in einer ersten Einstellung und in einer von der ersten Einstellung verschiedenen zweiten Einstellung mittels Federkraft zu rasten, wenn das erste Glied (11) relativ zu dem zweiten Glied (12) um die Drehachse (16) geschwenkt wird,
**dadurch gekennzeichnet, dass**
bei einem Schwenken des ersten Glieds (11) relativ zu dem zweiten Glied (12) der an der Federzunge (32, 34) der ersten Gelenkplatte (21) ausgebildete Rastabschnitt (36, 46) mit dem zweiten komplementären Rastabschnitt (64, 68) an der zweiten Gelenkplatte (24) die Gelenkverbindung (14) zwischen einer eingefalteten und einer ausgefalteten Stellung der Glieder (11, 12) in einer abgewinkelten Stellung rastet,
wobei das zweite Glied (12) eine wannenartige Ausnehmung (79) aufweist, die den ersten komplementären Rastabschnitt (62, 66) aufnimmt, und
wobei das zweite Glied (12) im Bereich einer Durchgangsbohrung für den Nietbolzen (30) der Gelenkverbindung (14) einen die Gelenkverbindung (14) stabilisierenden, an einer dem ersten Glied (11) zugewandten Breitseitenfläche (5) des zweiten Glieds (12) quer zu dessen Längsachse (17) unter dem zweiten komplementäre Rastabschnitt (64, 68) an der zweiten Gelenkplatte (24) und darüber hinaus erstreckten Stegabschnitt (82) aufweist, der von dem Nietbolzen (30) durchsetzt ist.

2. Gliedermaßstab nach Anspruch 1, **dadurch gekennzeichnet, dass** das erste Glied (11) eine wannenartige Ausnehmung (77) aufweist, in welche die Federzunge (32) mit dem Rastabschnitt (36, 46) bei einem Verstellen der Gelenkverbindung (14) eintauchen kann,
wobei das erste Glied (11) im Bereich einer Durchgangsbohrung für den Nietbolzen (30) der Gelenkverbindung (14) einen an einer dem zweiten Glied (12) zugewandten Breitseitenfläche (5) des ersten Glieds (11), quer zu dessen Längsachse (13) erstreckten, die Gelenkverbindung (14) stabilisierenden Stegabschnitt (81) aufweist.

3. Gliedermaßstab nach Anspruch 2, **dadurch gekennzeichnet, dass** der die Gelenkverbindung (14) stabilisierende Stegabschnitt (81) des ersten Glieds (11) zwischen dessen wannenartiger Ausnehmung (77) und einer in dem ersten Glied (11) ausgebildeten weiteren wannenartigen Ausnehmung (78) verläuft.

4. Gliedermaßstab nach einem der Ansprüche 1 bis 3, **dadurch gekennzeichnet, dass** der die Gelenkverbindung (14) stabilisierende Stegabschnitt (82) des zweiten Glieds (12) zwischen dessen wannenartiger Ausnehmung (79) und einer in dem zweiten Glied (12) ausgebildeten weiteren wannenartigen Ausnehmung (80) verläuft.

5. Gliedermaßstab nach einem der Ansprüche 1 bis 4, **dadurch gekennzeichnet, dass** der zweite komplementäre Rastabschnitt eine seitliche Aussparung (64,68) in der zweiten Gelenkplatte (24) ist.

6. Gliedermaßstab nach Anspruch 5, **dadurch gekennzeichnet, dass** die seitliche Aussparung (64,68) rechteckförmig ist.

7. Gliedermaßstab nach einem der Ansprüche 1 bis 4, **dadurch gekennzeichnet, dass** der zweite komplementäre Rastabschnitt als eine Vertiefung (88,89) in der zweiten Gelenkplatte (85) ausgebildet ist.

8. Gliedermaßstab nach Anspruch 7, **dadurch gekennzeichnet, dass** die Vertiefung (92) eine gekrümmte Bodenfläche (93) hat.

9. Gliedermaßstab nach Anspruch 7, **dadurch gekennzeichnet, dass** die Vertiefung (86,87) eine ebene Bodenfläche (88,89) hat.

10. Gliedermaßstab nach Anspruch 7, **dadurch gekennzeichnet, dass** in der Vertiefung (96,99) eine Durchbrechung ausgebildet ist.

11. Gliedermaßstab nach einem der Ansprüche 1 bis 4, **dadurch gekennzeichnet, dass** der zweite komplementäre Rastabschnitt eine runde (103) oder eine eckige (101) Einschlifffase in der zweiten Gelenkplatte (24) ist.

12. Gliedermaßstab nach einem der Ansprüche 1 bis 11, **dadurch gekennzeichnet, dass** der Rastabschnitt (36,46) an der Federzunge (32, 34) eine Erhebung ist.

13. Gliedermaßstab nach Anspruch 12, **dadurch gekennzeichnet, dass** der Rastabschnitt an der Federzunge (32,34) als Pyramidenstumpf (36,46) ausgebildet ist, der eine zur Drehachse (16) der Gelenkverbindung (14) weisende, langgestreckte schräge Flanke (40,50) hat.

14. Gliedermaßstab nach einem der Ansprüche 1 bis 13, **dadurch gekennzeichnet, dass** der erste komplementäre Rastabschnitt in der zweiten Gelenkplatte (24) als Vertiefung (62,66) ausgebildet ist.

15. Gliedermaßstab nach einem der Ansprüche 1 bis 14, **dadurch gekennzeichnet, dass** das erste Glied (11) eine Versenkungsausnehmung (75) für die erste Gelenkplatte (21) hat, und/oder dass das zweite Glied (13) eine Versenkungsausnehmung (76) für die zweite Gelenkplatte (24) hat.

## Claims

1. Folding rule comprising elongate flat members (11, 12) which are hingedly connected in pairs and which each have a longitudinal axis (13, 17),
in which a hinge connection (14) having an axis of rotation (16) and having a rivet pin (30) has a first hinge plate (21) which is fixed to a first member (11), and comprises a second hinge plate (24) which is fastened to a second member (12),
a spring tongue (32, 34) which has a latching portion (36, 46) being formed on the first hinge plate (21), which latching portion interacts with a first complementary latching portion (62, 66) and with a second complementary latching portion (64, 68) on the second hinge plate (24) in order to latch the hinge connection (14), by means of spring force, in a first setting and in a second setting different from the first setting when the first member (11) is pivoted relative to the second member (12) about the axis of rotation (16),
**characterized in that**
the latching portion (36, 46) formed on the spring tongue (32, 34) of the first hinge plate (21), together with the second complementary latching portion (64, 68) on the second hinge plate (24), latches the hinge connection (14) in an angled position between a folded-in and a folded-out position of the members (11, 12) during pivoting of the first member (11) relative to the second member (12),
the second member (12) having a trough-like recess (79) which receives the first complementary latching portion (62, 66), and
the second member (12) having, in the region of a through-hole for the rivet pin (30) of the hinge connection (14), a rib portion (82) which stabilizes the hinge connection (14), which extends on a broadside surface (5) of the second member (12) that faces the first member (11), transversely to its longitudinal axis (17), below the second complementary latching portion (64, 68) on the second hinge plate (24) and therebeyond, through which rib portion the rivet pin (30) passes.

2. Folding rule according to claim 1, **characterized in that** the first member (11) has a trough-like recess (77) into which the spring tongue (32), with the latching portion (36, 46), can be inserted during adjustment of the hinge connection (14),
the first member (11) having, in the region of a through-hole for the rivet pin (30) of the hinge connection (14), a rib portion (81) which extends on a broadside surface (5) of the first member (11) that faces the second member (12), transversely to its longitudinal axis (13), and which stabilizes the hinge connection (14).

3. Folding rule according to claim 2, **characterized in that** the rib portion (81) of the first member (11), which stabilizes the hinge connection (14), extends between the trough-like recess (77) and a further trough-like recess (78) formed in the first member (11).

4. Folding rule according to any of claims 1 to 3, **characterized in that** the rib portion (82) of the second member (12), which stabilizes the hinge connection (14), extends between the trough-like recess (79) and a further trough-like recess (80) formed in the second member (12).

5. Folding rule according to any of claims 1 to 4, **characterized in that** the second complementary latching portion is a lateral hollow (64, 68) in the second hinge plate (24).

6. Folding rule according to claim 5, **characterized in that** the lateral hollow (64, 68) is rectangular.

7. Folding rule according to any of claims 1 to 4, **characterized in that** the second complementary latching portion is designed as a depression (88, 89) in the second hinge plate (85).

8. Folding rule according to claim 7, **characterized in that** the depression (92) has a curved bottom surface (93).

9. Folding rule according to claim 7, **characterized in that** the depression (86, 87) has a flat bottom surface (88, 89).

10. Folding rule according to claim 7, **characterized in that** an opening is formed in the depression (96, 99).

11. Folding rule according to any of claims 1 to 4, **characterized in that** the second complementary latching portion is a round (103) or an angular (101) ground-in bevel in the second hinge plate (24).

12. Folding rule according to any of claims 1 to 11, **characterized in that** the latching portion (36, 46) on the spring tongue (32, 34) is an elevation.

13. Folding rule according to claim 12, **characterized in that** the latching portion on the spring tongue (32, 34) is designed as a truncated pyramid (36, 46) which has an elongate, inclined flank (40, 50) pointing toward the axis of rotation (16) of the hinge connection (14).

14. Folding rule according to any of claims 1 to 13, **characterized in that** the first complementary latching portion in the second hinge plate (24) is designed as a depression (62, 66).

15. Folding rule according to any of claims 1 to 14, **characterized in that** the first member (11) has a sunken recess (75) for the first hinge plate (21), and/or **in that** the second member (13) has a sunken recess (76) for the second hinge plate (24).

## Revendications

1. Mètre pliant comportant des bielles (11, 12) plates allongées qui sont reliées de manière articulée par paires et qui présentent respectivement un axe longitudinal (13, 17), une liaison d'articulation (14) comportant un axe de rotation (16) et comportant un boulon rivé (30) présentant une première plaque d'articulation (21) qui est fixée à une première bielle (11) et présentant une seconde plaque d'articulation (24) qui est fixée à une seconde bielle (12),
une languette élastique (32, 34) comportant une section de verrouillage (36, 46) étant formée sur la première plaque d'articulation (21), laquelle languette élastique coopérant avec une première section de verrouillage complémentaire (62, 66) et une seconde section de verrouillage complémentaire (64, 68) sur la seconde plaque d'articulation (24) afin de verrouiller la liaison d'articulation (14) dans un premier réglage et dans un second réglage différent du premier réglage au moyen de l'élasticité lorsque la première bielle (11) est pivotée autour de l'axe de rotation (16) par rapport à la seconde bielle (12),
**caractérisé en ce que**
lors d'un pivotement de la première bielle (11) par rapport à la seconde bielle (12), la section de verrouillage (36, 46) formée sur la languette élastique (32, 34) de la première plaque d'articulation (21) verrouille, avec la seconde section de verrouillage complémentaire (64, 68), la liaison d'articulation (14) sur la seconde plaque d'articulation (24) entre une position repliée et une position dépliée des bielles (11, 12) dans une position coudée,
la seconde bielle (12) présentant un évidement en forme d'auge (79) qui reçoit la première section de verrouillage complémentaire (62, 66), et
la seconde bielle (12) présentant, dans la zone d'un trou traversant pour le boulon rivé (30) de la liaison d'articulation (14), une section d'entretoise (82) stabilisant la liaison d'articulation (14) et s'étendant sur une surface latérale en largeur (5) de la seconde bielle (12) faisant face à la première bielle (11), transversalement par rapport à son axe longitudinal (17), sous la seconde section de verrouillage complémentaire (64, 68) sur la seconde plaque d'articulation (24) et au-delà de celle-ci, ladite section d'entretoise étant pénétrée par le boulon rivé (30).

2. Mètre pliant selon la revendication 1, **caractérisé en ce que** la première bielle (11) présente un évidement en forme d'auge (77), dans lequel la languette élastique (32) comportant la section de verrouillage (36, 46) peut plonger lorsque la liaison d'articulation (14) est ajustée,
la première bielle (11), dans la zone d'un trou traversant pour le boulon rivé (30) de la liaison d'articulation (14), présentant une section d'entretoise (81) s'étendant sur une surface latérale en largeur (5) de la première bielle (11) faisant face à la seconde bielle (12), transversalement par rapport à son axe longitudinal (13), et stabilisant la liaison d'articulation (14).

3. Mètre pliant selon la revendication 2, **caractérisé en ce que** la section d'entretoise (81) de la première bielle (11) stabilisant la liaison d'articulation (14) s'étend entre son évidement en forme d'auge (77) et un autre évidement en forme d'auge (78) formé dans la première bielle (11).

4. Mètre pliant selon l'une des revendications 1 à 3, **caractérisé en ce que** la section d'entretoise (82) de la seconde bielle (12) stabilisant la liaison d'articulation (14) s'étend entre son évidement en forme d'auge (79) et un autre évidement en forme d'auge (80) formé dans la seconde bielle (12).

5. Mètre pliant selon l'une des revendications 1 à 4, **caractérisé en ce que** la seconde section de verrouillage complémentaire est un évidement latéral (64, 68) dans la seconde plaque d'articulation (24).

6. Mètre pliant selon la revendication 5, **caractérisé en ce que** l'évidement latéral (64, 68) est rectangulaire.

7. Mètre pliant selon l'une des revendications 1 à 4, **caractérisé en ce que** la seconde section de verrouillage complémentaire est formée en tant que cavité (88, 89) dans la seconde plaque d'articulation (85).

8. Mètre pliant selon la revendication 7, **caractérisé en ce que** la cavité (92) présente une surface de base courbe (93).

9. Mètre pliant selon la revendication 7, **caractérisé en ce que** la cavité (86, 87) présente une surface de base plate (88, 89).

10. Mètre pliant selon la revendication 7, **caractérisé en ce qu'**une ouverture est formée dans la cavité (96, 99).

11. Mètre pliant selon l'une des revendications 1 à 4, **caractérisé en ce que** la seconde section de verrouillage complémentaire est un chanfrein rond (103) ou angulaire (101) dans la seconde plaque d'articulation (24).

12. Mètre pliant selon l'une des revendications 1 à 11, **caractérisé en ce que** la section de verrouillage (36, 46) sur la languette élastique (32, 34) est une élévation.

13. Mètre pliant selon la revendication 12, **caractérisé en ce que** la section de verrouillage sur la languette élastique (32, 34) est formée en tant que pyramide tronquée (36, 46) qui présente un flanc incliné allongé (40, 50) pointant vers l'axe de rotation (16) de la liaison d'articulation (14).

14. Mètre pliant selon l'une des revendications 1 à 13, **caractérisé en ce que** la première section de verrouillage complémentaire est formée en tant que cavité (62, 66) dans la seconde plaque d'articulation (24).

15. Mètre pliant selon l'une des revendications 1 à 14, **caractérisé en ce que** la première bielle (11) présente un évidement fraisé (75) pour la première plaque d'articulation (21), et/ou **en ce que** la seconde bielle (13) présente un évidement fraisé (76) pour la seconde plaque d'articulation (24).
